Europäisches Patentamt

European Patent Office

Office européen des brevets

(11) Publication number: **0 251 266**
**A2**

(12) **EUROPEAN PATENT APPLICATION**

(21) Application number: **87109301.9**

(22) Date of filing: **28.06.87**

(51) Int. Cl.⁴: **B23B 31/18**

(30) Priority: **04.07.86 IT 6753986**

(43) Date of publication of application:
**07.01.88 Bulletin 88/01**

(84) Designated Contracting States:
**DE ES FR GB**

(71) Applicant: **AUTOBLOK S.p.A.**
**Via Duca d'Aosta 24**
**I-10040 Caprie Torino(IT)**

(72) Inventor: **Bronzino, Walter**
**Via Krushev 5**
**I-10040 Caprie Province of Torino(IT)**
Inventor: **Bronzino, Pier Mauro**
**Via Krushev. 5**
**I-10040 Caprie Province of Torino(IT)**

(74) Representative: **Modiano, Guido et al**
**MODIANO, JOSIF, PISANTY & STAUB**
**Modiano & Associati Via Meravigli, 16**
**I-20123 Milan(IT)**

(54) **Automatic self-centering and self-positioning mandrel.**

(57) The automatic mandrel comprises a plurality of levers (19) for the support of corresponding jaws (16), a sleeve (15) sealingly slideable in the mandrel body and subjected to control means, a plurality of radial sliders (20) which convert the axial movements of the sleeve into gripping and positioning movements of each jaw. Each lever comprises a first spherical portion (190) for the articulation of said lever to the body of the mandrel and a second terminal hemispherical portion (191) for the articulation to the lever of the corresponding control slider. The first spherical portion is axially movable in a cylindrical seat (23) of the mandrel body, and the second hemispherical portion is engaged in a truncated-cone seat (24) of the corresponding slider. The truncated-cone seat (24) acts as an inclined plane to transmit to the terminal portion of the lever (191) a control force having a radial component and an axial component, the first one being adapted to produce a corresponding radial gripping oscillation and the second one being adapted to produce an axial positioning movement of the lever, subsequent to the radial gripping oscillation and limited by a front stop (30).

Fig. 1

## AUTOMATIC SELF-CENTERING AND SELF-POSITIONING MANDREL

The present invention relates to an automatic mandrel of the self-centering and self-positioning type, the latter term defining the ability of the mandrel to produce, after the clamping of the workpiece, an axial translatory motion thereof to make it engage by forced contact against a datum or shaving plane arranged in front of the mandrel body; said datum plane being assumed as reference for all the dimensions of the workpiece.

Mandrels of this type essentially consist of a mandrel body, wherein a sleeve is slideable for the control of a plurality of clamp-holding jaws subjected to a radial oscillation to clamp the workpiece and to a subsequent axial translatory motion for the positioning thereof.

Various solutions are known which are adapted to provide said oscillations and translatory motions of the jaws, but all such known solutions have various disadvantages.

The U.S. Patent No. 3.472.526 describes a self-centering and self-positioning mandrel wherein each jaw is rigidly associated with a lever which has a spherical rotula and a cylindrical tang. The rotula engages, with a preset axial play equal to the positioning stroke, in the corresponding seat of a first bush rigidly associated with the mandrel body. The cylindrical tang, the axis whereof is inclined with respect to the axis of the mandrel, engages in the cylindrical hole of a second bush which has its outer surface in the shape of a spherical dome, which in turn engages in the corresponding spherical seat of a star-shaped support rigidly associated with the control sleeve. With such an arrangement, when the sleeve is made to move by its related control means, the second bush slides on the cylindrical tang of the lever, producing the clamping oscillation of the jaw at the end whereof the second bush, by virtue of the inclination of said cylindrical tang, axially pulls the lever which performs the cylindrical positioning movement allowed by the axial play of the first bush.

The main disadvantage of said known self-centering and self-positioning mandrel resides in the fact that the jaw control levers, at the end of the positioning stroke, do not rest on a rigid part of the mandrel body, but on said star-shaped support rigidly associated with the control sleeve. The consequence of this is a reduced repeatability of the concentricity of the grip.

Another disadvantage derives from the fact that said mandrel requires the manual rotation of the jaws to perform the outward grip (bar) or the inward grip (pipe). A further disadvantage resides in the difficulty of manufacturing the first bush whereto the rotula of the lever articulates with the possibility of axial play.

Some of these disadvantages have been eliminated by other known solutions. In particular, the solution described in the French patent No. 2.373.351 eliminates the disadvantage of the reduced repeatability by virtue of the engagement of the end of the lever, at the end of the positioning stroke, with a rigid part of the mandrel body. However, the disadvantage due to the need to rotate the jaws through 180° to allow the mandrel to effect gripping from outward or inward, which is currently deeply felt due to the ever increasing diffusion of numeric control machines with programmable devices for the automatic change of the jaws, still remains.

The aim of the present invention is essentially to eliminate these and other disadvantages of known mandrels, and, within this general aim, an important object of the invention is to provide an automatic self-centering and self-positioning mandrel capable of ensuring a satisfactory repeatability of gripping and, at the same time, adapted to allow outward and inward gripping of the workpiece without requiring structural adaptations and/or interventions by the operator on the orientation of the jaws.

Another important object of the present invention is to provide a self-centering and self-positioning mandrel with a compensation of the centrifugal force which by acting on the mass of the jaws and the clamps tends to reduce the locking forces.

Other objects of the present invention are to provide a mandrel sealed both against outward leaks of lubricant and against inward leaks of the lubricating and cooling emulsions of the workpiece, as well as a mandrel structured so as to allow the adaptation of the clamp to the shape of the rough workpiece to be gripped; for this purpose the clamps being adapted to perform so-called equalization oscillations about a refined axis parallel to the axis of the mandrel.

This aim and objects are achieved by a self-centering and self-positioning mandrel according to the appended claims.

The features, objects and advantages of the invention will become apparent from the following detailed description and with reference to the accompanying drawings, given only by way of non-limitative example, wherein:

Fig. 1 is a deviated axial cross section of the mandrel object of the invention;

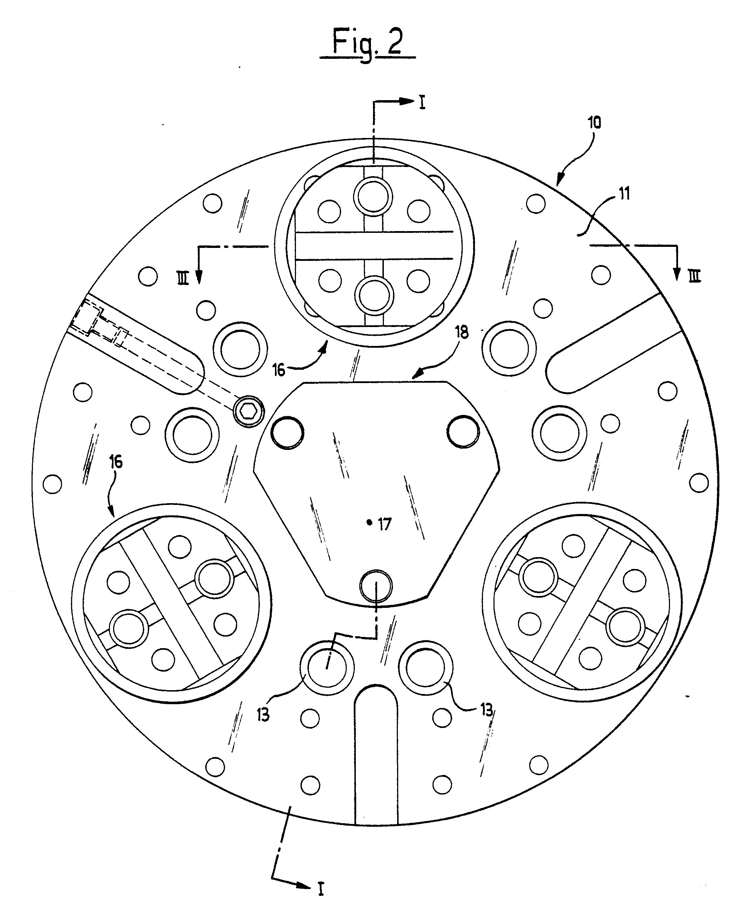

Fig. 2 is a reduced scale front view of said mandrel;

Fig. 3 is an enlarged scale cross section view taken along line III-III of fig. 2;

Fig. 4 is a cross section view taken along line IV-IV of fig. 3; and

Fig. 5 and 5a are diagrams illustrating the work step applied to each lever supporting the jaws.

In the drawings, 10 generally indicates the mandrel body, formed by a stiff front plate 11 in the shape of a bell-like disc and by a back wall 12, rigidly associated with one another by means of bolts 13. In the body of the mandrel, a cavity 14 is provided, wherein a sleeve 15 is axially sealingly slideable and is subject to control means, generally fluidodynamic means not illustrated in the figure. The plate 11 of the mandrel body supports three jaws 16, angularly spaced apart by 120°, which can perform a radial oscillation for gripping the workpiece and an axial positioning stroke. The radial gripping oscillation can be in a centripetal direction for outward gripping the workpiece, or in a centrifugal direction for inward gripping. The axial positioning stroke is adapted to move the workpiece and, after gripping, to make it engage by frontal contact with the rectified plane 17 of a central cover 18; all the machining dimensions of the workpiece being provided with reference to said plate. For this purpose the jaws 16 are provided at the end of corresponding supporting levers 19 which are oscillable and axially movable with respect to the plate 11 of the mandrel body. Each lever is subject to the action of a corresponding slider 20, freely slideable in a related radial seat 21 of the mandrel body.

Each slider 20 is connected to the sleeve 15, through a positive and bidirectional inclined plane coupling 22 which converts the axial movements of the sleeve into corresponding radial movements of the slider. Each supporting lever 19 comprises a first spherical portion 190 for articulating said lever to the plate 11 of the mandrel body and a second hemispherical terminal portion 191 for articulating the end of the corresponding slider 20 to the lever. The portion 190 is accommodated in a cylindrical seat 23 of the plate 11, the internal diameter whereof is substantially equal (except for the tolerance required to avoid driving) to the equatorial diameter of said portion 190. The lever 19 is therefore free to rotate, without appreciable play, about the center of its own spherical portion 190 and to move axially within the cylindrical seat 23.

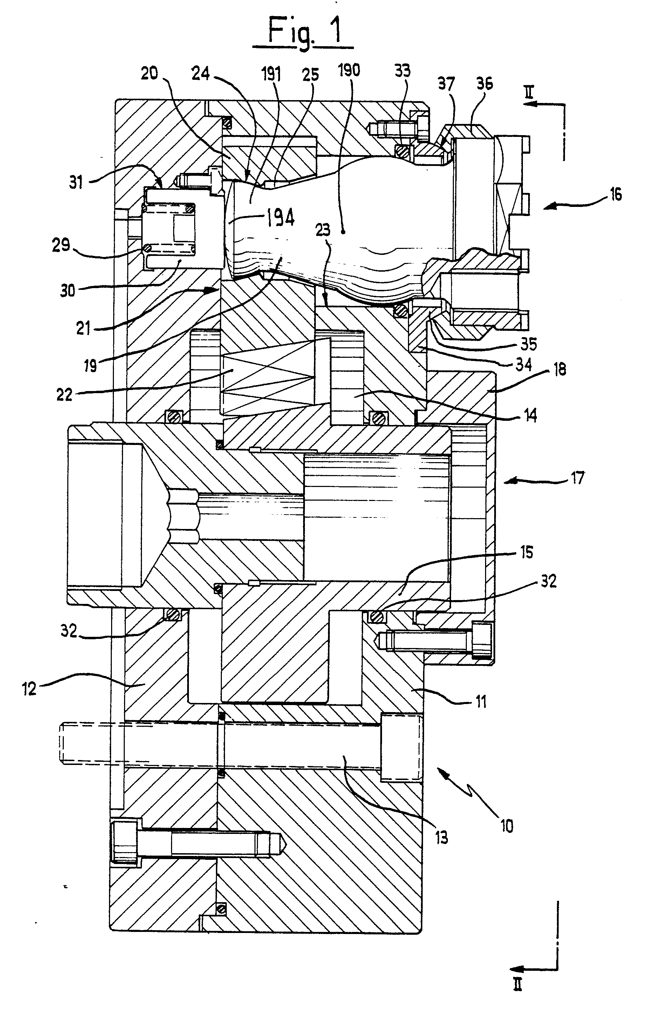

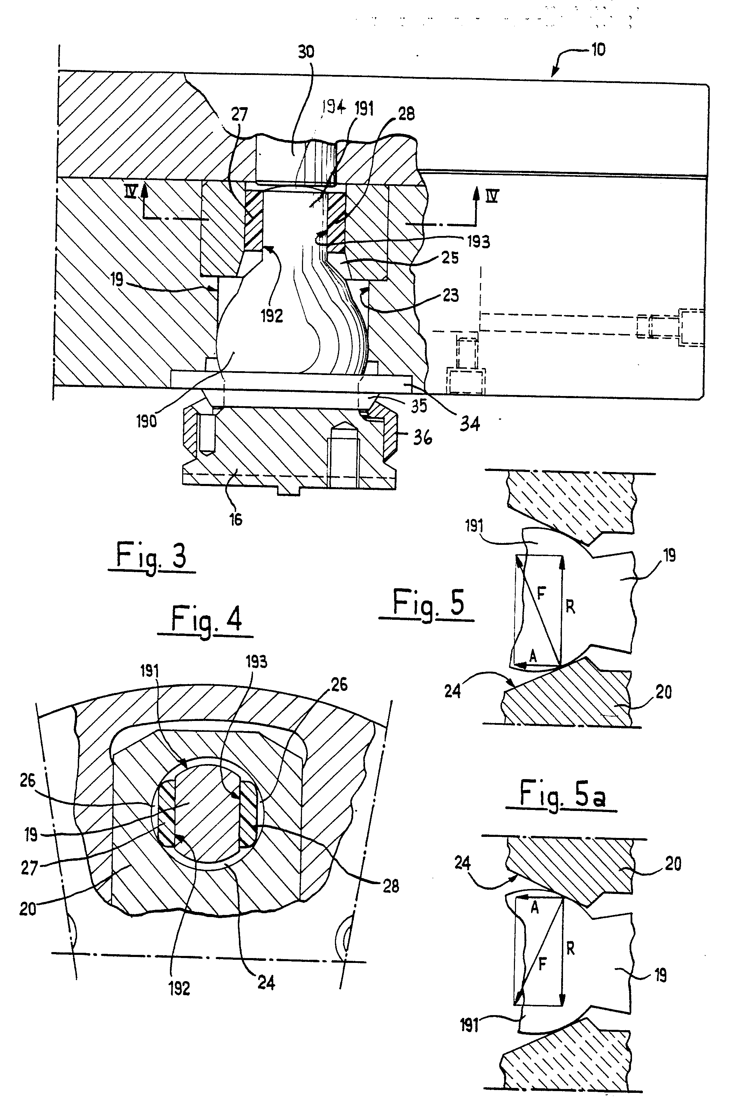

The hemispherical portion 191 is in turn accommodated in a conical seat 24 of the slider 20. The seat 24 is provided on the surface of the slider facing the back wall 12 of the mandrel body and is connected, on its bottom, to a port 25 accommodating an intermediate portion of the lever 19, so that the portion 190 and the portion 191 of the lever are located on opposite sides with respect to the slider 20. To allow insertion of the second hemispherical portion 191 in the corresponding seat 24 of the slider 20, said portion is truncated by a pair of parallel chordal planes 192-193 (see figs. 3,4) and, correspondingly, the port 25 of the seat 24 is provided with two passages 26 shaped as cylinder sectors and arranged at 90° with respect to the work position of the portion 191, so that said portion is introduced with the chordal planes parallel to the line joining the passages 26 and then rotated through 90° into the work position illustrated in figures 1 and 3. Elastic elements 27-28 are accommodated in the cylindrical passages 26 and, reacting elastically, maintain, idling, the axial orientation of the lever 19.

As is clearly illustrated in figure 1, in work position the portion 191 engages with the conical surface of the seat 24. This surface acts as an inclined plane and applies to the portion 191 a force F which is perpendicular (except for the friction angles) to the seat point in contact with the portion 191. The force F is directed upwards as illustrated in fig. 5 for a corresponding radial centrifugal movement of the slider 20, and downwards as illustrated in fig. 5a for a centripetal movement of said slider. The force can be resolved into a radial component R directed accordingly, and into an axial component A with a smaller value; the ratio between the radial and axial components being, for example, approximately 5:1. The radial component R initially causes the corresponding radial gripping oscillation of the jaw, and when this force is balanced by the reaction of the workpiece the axial component A, overcoming the component of the contact friction between the seat 24 and the portion 191 and the elastic action of a spring 29 which will be described hereafter, causes the axial positioning sliding of the lever 19. This sliding is limited by a stop consisting of a cylinder 30 slideably contained in a corresponding blind cylindrical seat 31 provided in the back wall 12 and pushed by the spring 29 in frontal contact engagement with the frontal wall 194 of the portion 191 of the lever 19. The cylinder 30 limits the axial stroke of the lever, abuttingly engaging the bottom of the corresponding blind seat 31, and thus gives the mandrel the required repeatability of its grip.

From the preceding description it is also apparent that - in accordance with the above objects - the mandrel can indifferently perform locking and positioning of the workpiece with an outward or inward grip according to the direction of the motion of the sleeve 15.

It is also evident that each lever 19 can rotate partially about its own axis, elastically in contrast with the elements 27, 28 or with equivalent elastic means, and thus allow the related so-called equalization oscillations to the clamps.

Again in accordance with the above objects, the mandrel is also sealed tight, by virtue of the presence of gaskets, indicated at 32 and 33, which embrace both the cylindrical body of the sleeve 15 and the terminal part of the spherical portion 190 of each lever 19. As is clearly illustrated in figure 1, the gaskets 33 are clamped by covers 34 provided with a spherical collar 35 whereon a bush 36 is fitted, which is rigidly associated with the jaw, and is provided with a corresponding conical seat 37.

Finally, it should be noted that the terminal hemispherical portion 191 of the lever 19 is arranged on the opposite side of the jaw 16 with respect to the center of oscillation of the lever, which coincides with the center of the first hemispherical portion 190. Consequently, the portion 191 acts, together with the slider 20, as a mass for compensating the centrifugal force which affects the jaw 16.

Naturally, the concept of the invention remaining invariant, the details of the execution and the embodiments may be extensively variated with respect to what has been described, and illustrated herein by way of non-limitative example, without thereby abandoning the scope of the invention.

**Claims**

1. Self-centering and self-positioning mandrel, comprising a mandrel body (10), a plurality of levers (19) for supporting corresponding clamp holding jaws (16), a sleeve (15) which is sealingly slideable in the mandrel body (10) and is subject to control means, a plurality of radial sliders (20) which convert the axial movements of the sleeve (15) into gripping and positioning movements of each jaw (16), characterized in that each lever (19) comprises a spherical portion (190) for articulation of said lever to the mandrel body (10) and a hemispherical end portion (191) for articulation to the lever of the corresponding control slider (20); the spherical portion (190) being accommodated, axially movable, in a cylindrical seat (23) of the mandrel body (10), the hemispherical end portion (191) being engaged in a truncated-cone seat (24) of the corresponding slider (20); the truncated-cone seat (24) acting as an inclined plate to transmit to the hemispherical end portion (191) of the lever (19) a control force having a radial and an axial component respectively adapted to produce a radial gripping oscillation and an axial positioning movement of the lever, subsequent to the radial gripping oscillation, limited by a front stop (30).

2. Mandrel according to claim 1, characterized in that the truncated-cone seat (24) of the slider (20) has a through seat portion (25), so that the hemispherical end portion (191) of the lever (19) is arranged on the opposite side of the slider (20) with respect to the spherical articulation portion (190).

3. Mandrel according to claims 1 and 2, characterized in that the hemispherical end portion (191) of the lever (19) faces the end wall (12) of the mandrel body (10), and in that said end wall (12) is provided with a blind seat (31) accommodating, freely slideable, a stop cylinder (30) subjected to elastic means (29) which push it into frontal contact engagement with the end of the lever (19); the stop cylinder (30) being adapted to engage in abutment the bottom of its blind seat (31) to positively limit the axial positioning movement of said lever.

4. Mandrel according to the preceding claims, characterized in that each slider (20) is connected to the control sleeve (15) with a positive and bidirectional inclined plane coupling (22), so that according to the direction of the axial movement of the sleeve (15) the truncated seat (23) of the slider (20) transmits a radial centrifugal or centripetal oscillation component for respectively outwardly or inwardly gripping the workpiece to the end of the lever.

5. Mandrel according to claims 1 to 4, characterized in that the hemispherical end portion (191) of the lever (19) is truncated by a pair of parallel chordal planes (192,193) and in that the through port (25) of the related seat (24) in the slider (20) is provided with two opposed passages (26) at 90° with respect to the work position of the hemispherical end portion (191) so that the latter is introduced with the chordal planes (192,193) orientated parallel to the passages in the port (25) of the seat (24) and is then rotated through 90° into its working position.

6. Mandrel according to claim 5, characterized in that it comprises elastic means (27,28) acting on said chordal planes of the hemispherical end portion (191) to elastically oppose the rotations of the lever (19) about its own axis.

7. Mandrel according to the preceding claims, characterized in that the mass of the hemispherical end portion (191) of the lever (19), and the related slider (20), act to compensate the centrifugal force acting on the related jaw (16); the jaw and said end lever portion being arranged on opposite sides with respect to the center of rotation of said lever.

# Fig. 1

# Fig. 2

Fig. 3

Fig. 4

Fig. 5

Fig. 5a